# EUROPÄISCHE PATENTSCHRIFT

(11) **EP 3 931 031 B1**
(45) Veröffentlichungstag und Bekanntmachung des Hinweises auf die Patenterteilung: **27.08.2025**
(21) Anmeldenummer: 19828981.1
(22) Anmeldetag: 10.12.2019
(51) Int. Cl.: B60K 37/00, B62D 25/14, B60K 35/10, B60K 35/50, B60K 37/10

(54) **FESTLEGEVORRICHTUNG ZUM FESTLEGEN EINES MODULS AN EINER FAHRZEUGKOMPONENTE EINES KRAFTFAHRZEUGS**
FIXING DEVICE FOR FIXING A MODULE ON A VEHICLE COMPONENT OF A MOTOR VEHICLE
DISPOSITIF DE FIXATION D'UN MODULE SUR UN ÉLÉMENT DE VÉHICULE D'UN VÉHICULE AUTOMOBILE

(30) Priorität: 01.03.2019 DE 102019202854
(43) Veröffentlichungstag der Anmeldung: 05.01.2022
(73) Patentinhaber: Stellantis Auto SAS, 78300 Poissy (FR)
(72) Erfinder: KLAPPICH, Sven, 65428 Rüsselsheim am Main (DE); STAMBENE, Sandra, 65428 Rüsselsheim am Main (DE)
(74) Vertreter: BCIP
(86) Internationale Anmeldenummer: PCT/EP2019/084360
(87) Internationale Veröffentlichungsnummer: WO 2020/177911

(56) Entgegenhaltungen:
- DE-A1- 102014 014 302
- US-A1- 2006 266 890
- US-A1- 2015 151 636

## Beschreibung

Die Erfindung betrifft eine Festlegevorrichtung zum Festlegen eines Moduls an einer Fahrzeugkomponente eines Kraftfahrzeugs.

Festlegevorrichtungen zum Festlegen eines Moduls an einer Fahrzeugkomponente eines Kraftfahrzeugs sind beispielsweise bekannt, um ein als Panel (Instrumententafel) ausgebildetes Modul an einer als Konsole ausgebildeten Fahrzeugkomponente eines Kraftfahrzeugs festzulegen. Hierbei ist das Panel in der Konsole oft bündig angeordnet, was eine Montage, insbesondere mittels Verschraubung und Dergleichen, erschwert.

Aus US 2015/0151636 A1 ist eine Festlegevorrichtung bekannt, bei der eine Fügeeinheit eine Mehrzahl von hakenförmigen Fixierelementen umfasst, die elastisch vorgespannt in einer gefügten Anordnung in Aussparungen einer Aufnahmeeinheit der Fahrzeugkomponente verrasten. Aus dem Stand der Technik sind ferner die US 2015/151636 A1 und die US 2006/266890 A1 bekannt sowie die gattungsbildende DE 10 2014 014302 A1 bekannt.

Bei den bekannten Festlegevorrichtungen hat es sich als nachteilig herausgestellt, dass sich beim Auftreten von hohen Kräften, beispielsweise infolge eines Aufpralls auf das Kraftfahrzeug, die hakenförmigen Festlegeelemente aus ihrer festgelegten Position lösen können und das als Panel ausgebildete Modul in Richtung auf den Fahrzeuginnenraum bewegt wird. Um dem entgegenzuwirken, sind bei dem bekannten Festlegevorrichtungen zusätzlich Verschraubungen vorgesehen, um ein unbeabsichtigtes Lösen der hakenförmigen Fixierelemente als Fail Safe Lösung zu verhindern.

Eine Aufgabe eines Ausführungsbeispiels der Erfindung ist, eine Festlegevorrichtung vorzuschlagen, durch die verschraubungslos hohe Kräfte aufnehmbar sind.

Diese Aufgabe wird gelöst durch eine Festlegevorrichtung zum Festlegen eines Moduls an einer Fahrzeugkomponente eines Kraftfahrzeugs mit mindestens einer an dem Modul festgelegten Fügeeinheit und mit einer in oder an der Fahrzeugkomponente angeordneten Aufnahmeeinheit, in der oder an der die Fügeeinheit durch Bewegen in eine Fügerichtung festlegbar ist, wobei die Fügeeinheit mindestens ein Stellmittel aufweist, das beim Bewegen in Fügerichtung an einer Stellkontur der Aufnahmeeinheit entlanggleitbar und in einer Anschlagstellung anordenbar ist, in der das Stellmittel an einem Anschlag der Aufnahmeeinheit anliegend festlegbar ist, und wobei die Fügeeinheit mindestens ein Festlegemittel umfasst, das einen quer zur Fügerichtung erstreckten Vorsprung umfasst, das beim Bewegen in Fügerichtung in eine Aufnahmeöffnung der Aufnahmeeinheit einführbar ist und dessen Vorsprung durch das Stellmittel quer zur Fügerichtung bewegbar und in einer quer zur Fügerichtung erstreckten Ausnehmung in der Aufnahmeöffnung in diese eingreifend und, zumindest in der Anschlagstellung des Stellmittels, in einer Hintergriffstellung festlegbar ist, in der der Vorsprung die Ausnehmung bezüglich der Fügerichtung hintergreift.

Dadurch, dass das Festlegemittel durch das Stellmittel quer zur Fügerichtung bewegbar ist und durch das Stellmittel in die Ausnehmung in der Aufnahmeöffnung bewegbar und dort festlegbar ist, sind die durch die Festlegevorrichtung entgegen der Fügerichtung aufnehmbaren Kräfte erhöht. Hierdurch ist eine alternative zweckmäßige Bauform zu den bekannten Festlegevorrichtungen gebildet.

Bei dem Modul kann es sich beispielsweise um ein Panel handeln. Bei der Fahrzeugkomponente kann es sich beispielsweise um eine Fahrzeugkonsole handeln.

Das Festlegemittel lässt sich einfach und kostengünstig herstellen, wenn das Festlegemittel einen Längsabschnitt umfasst an dessen freiem Ende der Vorsprung abgeordnet ist und/oder wenn der Vorsprung haken-, keilförmig oder blockförmig ausgebildet ist.

Der Längsabschnitt hat insbesondere, bezüglich der Fügerichtung betrachtet, einen geringeren Durchmesser als der Vorsprung. Dadurch, dass der Vorsprung haken-, keilförmig oder blockförmig ausgebildet ist, kann auf einfache Weise ein Hintergriff mit einer hohen Auflagefläche zwischen Vorsprung und Wandung der Ausnehmung erreicht werden.

Darüber hinaus ist bei Ausführungsformen der Festlegevorrichtung vorgesehen, dass das Festlegemittel quer zur Fügerichtung im Wesentlichen unelastisch ausgebildet ist oder dass das Festlegemittel quer zur Fügerichtung elastisch ausgebildet ist und in die Hintergriffstellung vorgespannt ist.

Wenn das Festlegemittel quer zur Fügerichtung im Wesentlichen unelastisch ist, kann ein unbeabsichtigtes Verdrängen des Festlegemittels quer zur Fügerichtung vermieden werden. Wenn das Festlegemittel quer zur Fügerichtung elastisch ausgebildet ist und in Richtung auf die Hintergriffstellung vorgespannt ist, kann das Festlegemittel beim Einführen in die Aufnahmeöffnung der Aufnahmeeinheit quer zur Fügerichtung verdrängt werden und bei Erreichen der quer zur Fügerichtung erstreckten Ausnehmung in der Aufnahmeöffnung automatisch mit dem Vorsprung in die Hintergriffstellung geführt werden.

Das Aufnehmen von Kräfte entgegen der Fügerichtung durch die Festlegevorrichtung lässt sich weiter erhöhen, wenn, wie erfindungsgemäß vorgesehen, die Aufnahmeeinheit mindestens einen in Richtung auf die Fügeeinheit vorspringenden Auflagerabschnitt aufweist und wenn die Fügeeinheit mindestens einen Wippabschnitt aufweist, der in der Anschlagstellung am Auflagerabschnitt anliegt, wobei der Wippabschnitt zwischen dem Festlegemittel und dem Stellmittel angeordnet ist und wobei das Stellmittel in der Anschlagstellung das Festlegemittel über den Wippabschnitt mit einer Hebelkraft in Richtung auf die Hintergriffstellung beaufschlagt.

Solchenfalls ist der Vorsprung durch zusätzlich wirkende Hebekräfte durch das Stellmittel in die Hintergriffstellung vorgespannt.

Die auf den Vorsprung wirkende Hebelkraft lässt sich auf einfache Weise erhöhen, wenn ein zwischen dem Wippabschnitt und dem Stellmittel gebildeter erster Hebelarm eine größere Erstreckung umfasst als ein zwischen dem Wippabschnitt und dem Festlegemittel gebildeter zweiter Hebelarm, insbesondere wenn das Längenverhältnis zwischen dem ersten Hebelarm und dem zweiten Hebelarm größer gleich 3:1, insbesondere 5:1, insbesondere 10:1, umfasst.

Um der Entstehung von Geräuschen, insbesondere einem Klappern, beim Betrieb des Neigefahrzeugs vorzubeugen, erweist es sich als vorteilhaft, wenn der Wippabschnitt einen zumindest in Fügerichtung elastisch nachgiebigen Bereich umfasst.

Solchenfalls können durch den nachgiebigen Bereich Fertigungstoleranzen auf einfache Weise ausgeglichen werden, wodurch die Herstellungskosten der Festlegevorrichtung reduziert sind und Ausschuss reduziert ist.

Um ein Fügen der Fügeeinheit mit der Aufnahmeeinheit zu erleichtern, ist bei einer Ausführungsform der Festlegevorrichtung vorgesehen, dass die Stellkontur der Aufnahmeeinheit auf der Fügerichtung abgewandten Seite einen schräg zur Fügerichtung erstreckten Abschnitt umfasst, der eine Führung für das Stellmittel der Fügeeinheit bei Bewegung in Fügerichtung bildet.

Solchenfalls gleitet das Stellmittel, sobald es in Eingriff mit der Stellkontur der Aufnahmeeinheit gelangt, in seiner Bewegung bis hin zur Anschlagstellung geführt.

Grundsätzlich ist es denkbar, dass das Stellmittel in der Anschlagstellung kraft- und/oder reibschlüssig festgelegt ist. Ferner erweist es sich als vorteilhaft, wenn die die Stellkontur mindestens eine quer zur Fügerichtung erstreckte Nut umfasst, in der das Stellmittel mit einem freien Ende in der Anschlagstellung zumindest abschnittsweise anordenbar ist.

Solchenfalls wird ein Formschluss des Stellmittels in der Anschlagstellung auf einfache Weise gewährleistet.

Darüber hinaus ist bei einer Ausführungsform der Festlegevorrichtung vorgesehen, dass die Stellkontur eine fingerartige Erstreckung in Richtung auf die Fügeeinheit umfasst und/oder dass das Stellmittel eine in Fügerichtung erstreckte Aussparung umfasst, in der die fingerartige Erstreckung der Stellkontur anordenbar ist.

Solchenfalls kann auf einfache Weise einem Bewegen der Fügeeinheit quer zur Fügerichtung vorgebeugt werden und die Montage der Fügeeinheit an der Aufnahmeeinheit erleichtert werden.

Grundsätzlich ist es denkbar, dass die Festlegevorrichtung das Modul ausschließlich durch mindestens eine Festlegeeinheit mit dem mindestens einem Festlegemittel, dem Wippabschnitt und dem Stellmittel an der Fahrzeugkomponente festlegt.

Um ein unbeabsichtigtes Lösen des Stellmittels aus der Anschlagstellung zu verhindern, kann bei einem Ausführungsbeispiel der Festlegevorrichtung vorgesehen sein, dass die Festlegeeinheit und die Aufnahmeeinheit mindestens eine in Fügerichtung erstreckte Öffnung umfasst, in der ein Haltemittel, wie Schrauben oder Bolzen, in der Anschlagstellung festlegbar ist und die Öffnung in der Fügeeinheit mit einem Kopfabschnitt gegen ein Bewegen entgegen der Fügerichtung hintergreift.

Solchenfalls wird die Festlegeeinheit zusätzlich mit der Aufnahmeeinheit verschraubt.

Schließlich erweist es sich als vorteilhaft, wenn das Festlegemittel, der Wippabschnitt und das Stellmittel der Festlegeeinheit ein gemeinsames Bauteil, insbesondere Spritzgussteil, umfassen.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Festlegevorrichtung.

In der Zeichnung zeigt:
- Figur 1: Eine isometrische Draufsicht auf ein Ausführungsbeispiel der Festlegevorrichtung;
- Figur 2: Eine geschnittene Detailansicht der Festlegevorrichtung gemäß Figur 1 im Bereich des Festlegemittels;
- Figur 3: Eine geschnittene Detailansicht der Festlegevorrichtung gemäß Figur 1 im Bereich des Stellmittels.

Die Figuren zeigen eine insgesamt mit dem Bezugszeichen 2 versehene Festlegevorrichtung zum Festlegen eines Moduls 4 an einer Fahrzeugkomponente 6 eines Kraftfahrzeugs (in den Figuren nicht explizit dargestellt). Die Festlegevorrichtung 2 umfasst eine Fügeeinheit 8, die an dem Modul 4 festgelegt ist.

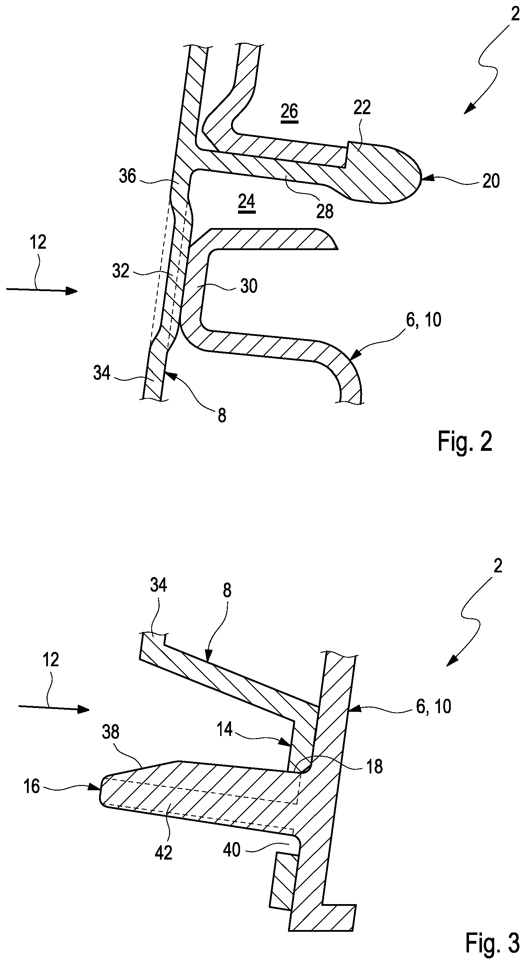

Darüber hinaus umfasst die Festlegevorrichtung 2 eine Aufnahmeeinheit 10, in der oder an der die Fügeeinheit 8 durch Bewegen in eine Fügerichtung 12 festlegbar ist. Die Fügeeinheit 8 umfasst mindestens ein Stellmittel 14, das beim Bewegen in Fügerichtung 12 an einer Stellkontur 16 der Aufnahmeeinheit 10 entlanggleitbar ist. Das Stellmittel 14 ist in einer Anschlagstellung (wie in Figur 3 dargestellt) anordenbar. In der Anschlagstellung ist das Stellmittel 14 an einem Anschlag 18 der Aufnahmeeinheit 10 anliegend festgelegt. Darüber hinaus umfasst die Fügeeinheit 8 der Festlegevorrichtung 2 ein Festlegemittel 20, das einen quer zur Fügerichtung 12 erstreckten Vorsprung 22 umfasst. Das Festlegemittel 20 ist beim Bewegen in Fügerichtung 12 in einer Aufnahmeöffnung 24 der Aufnahmeeinheit 10 einführbar. Der Vorsprung 22 des Festlegemittels 20 ist durch das Stellmittel 14 quer zur Fügerichtung 12 bewegbar und in einer Hintergriffstellung anordenbar, in der der Vorsprung 22 eine quer zur Aufnahmeöffnung 24 erstreckte Ausnehmung 26 bezüglich der Fügerichtung 12 hintergreift.

Bei den in den Figuren gezeigten Ausführungsbeispielen der Festlegevorrichtung 2 umfasst das Festlegemittel 20 einen Längsabschnitt 28, an dessen freien Ende der Vorsprung 22 angeordnet ist. Der Vorsprung 22 ist haken-, keil- oder blockförmig ausgebildet.

Darüber hinaus umfasst die Festlegevorrichtung 2 einen in Richtung auf die Fügeeinheit 8 vorspringenden Auflageabschnitt 30 und einen Wippabschnitt 32 der Fügeeinheit 8, der in der Anschlagstellung am Auflageabschnitt 30 anliegt. Der Wippabschnitt 32 ist bezüglich der Festlegerichtung 12 elastisch ausgebildet und ist zwischen dem Festlegemittel 20 und dem Stellmittel 14 angeordnet. Durch den Wippabschnitt 32 ist ein erster Hebelarm 34 zwischen dem Wippabschnitt 32 und dem Stellmittel 14 und ein zweiter Hebelarm 36 zwischen dem Wippabschnitt 32 und dem Festlegemittel 20 gebildet. Hierdurch wirkt beim Anordnen des Stellmittels 14 in der Anschlagstellung auf den Vorsprung 22 eine Hebelkraft, die den Vorsprung 22 in der Hintergriffstellung festlegt.

Dadurch, dass der Wippabschnitt 32 elastisch bezüglich der Fügerichtung 12 ausgebildet ist, können Fertigungstoleranzen auf einfache Weise ausgeglichen werden sowie ein Klapperschutz ausgebildet werden.

Um ein Fügen der Fügeeinheit 8 mit der Aufnahmeeinheit 10 zu erleichtern, umfasst die Stellkontur 16 einen schräg zur Fügerichtung 12 erstreckten Abschnitt 38. Darüber hinaus umfasst die Fügeeinheit 8 eine in Fügerichtung 12 erstreckte Aussparung 40, die auf eine fingerartige Erstreckung 42 der Stellkontur 16 aufschiebbar ist.

Aus den Figuren ist ersichtlich, dass das Stellmittel 14, das Festlegemittel 20 und der Wippabschnitt 32 der Fügeeinheit 8 ein gemeinsames Bauteil umfassen.

Figur 2 zeigt eine Detailansicht des Bereichs des Festlegemittels 20. Aus Figur 2 ist ersichtlich, dass der zweite Hebelarm 36 wesentlich kleiner ist als der erste Hebelarm 34. Der Wippabschnitt 32 ist in unmittelbarer Nähe zum Festlegemittel 20 angeordnet.

Figur 3 zeigt eine Detailansicht im Bereich des Stellmittels 14.

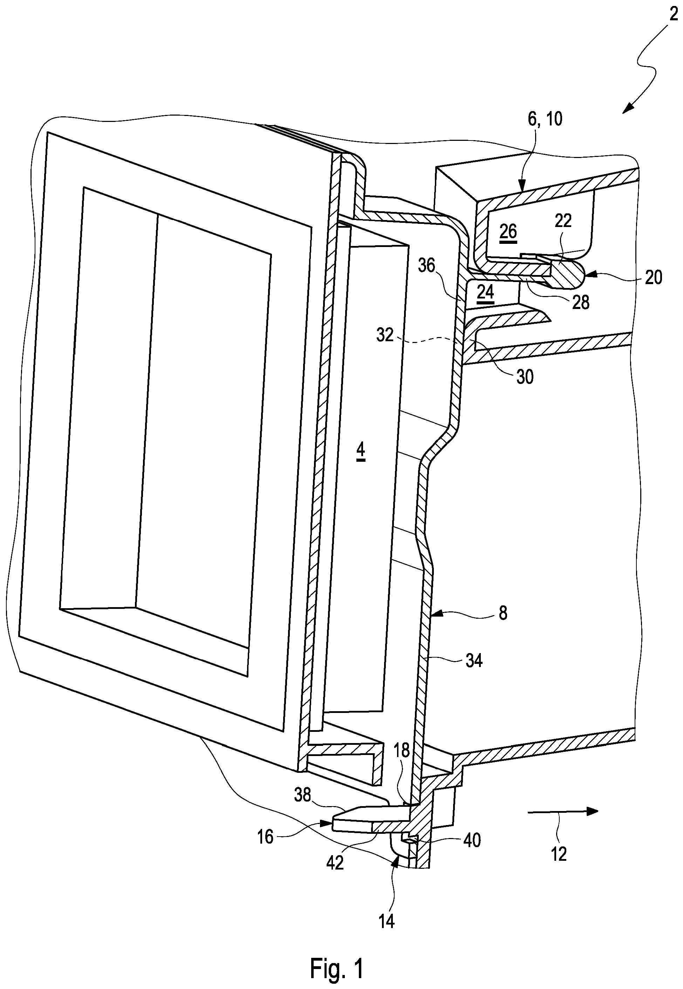

Im Folgenden wird unter Verweis auf die Figuren 1 bis 3 auf die Wirkungsweise der Festlegevorrichtung 2 eingegangen:
Beim Fügen des Moduls 4 an die Fahrzeugkomponente 6 wird die Fügeeinheit 8 in Fügerichtung 12 in der Aufnahmeeinheit 10 angeordnet. Hierbei greift das Festlegemittel 20 in die Aufnahmeöffnung 24 der Aufnahmeeinheit 10 ein und das Stellmittel 14 wird mit seiner Aussparung 40 auf die fingerartige Erstreckung 42 der Stellkontur 16 geschoben. Beim Erreichen der Anschlagstellung durch das Stellmittel 14 wirkt das Stellmittel 14 über den Wirkabschnitt 32 mit einer Hebelkraft auf das Festlegemittel 20, wodurch der Vorsprung 22 in der Hintergriffstellung in der Ausnehmung 26 festgelegt ist.

### Bezugszeichenliste

- 2: Festlegevorrichtung
- 4: Modul
- 6: Fahrzeugkomponente
- 8: Fügeeinheit
- 10: Aufnahmeeinheit
- 12: Fügerichtung
- 14: Stellmittel
- 16: Stellkontur
- 18: Anschlag
- 20: Festlegemittel
- 22: Vorsprung
- 24: Aufnahmeöffnung
- 26: Ausnehmung
- 28: Längsabschnitt
- 30: Auflageabschnitt
- 32: Wippabschnitt
- 34: erster Hebelarm
- 36: zweiter Hebelarm
- 38: Schrägabschnitt
- 40: Aussparung
- 42: fingerartige Erstreckung

## Patentansprüche

1. Festlegevorrichtung (2) zum Festlegen eines Moduls (4) an einer Fahrzeugkomponente (6) eines Kraftfahrzeugs mit mindestens einer an dem Modul (4) festlegbaren Fügeeinheit (8) und mit einer in oder an der Fahrzeugkomponente (6) anordenbaren Aufnahmeeinheit (10), in der oder an der die Fügeeinheit (8) durch Bewegen in eine Fügerichtung (12) festlegbar ist, wobei die Fügeeinheit (8) mindestens ein Stellmittel (14) aufweist, das beim Bewegen in Fügerichtung (12) an einer Stellkontur (16) der Aufnahmeeinheit (10) entlanggleitbar und in einer Anschlagstellung anordenbar ist, in der das Stellmittel (14) an einem Anschlag (18) der Aufnahmeeinheit (10) anliegend festlegbar ist und wobei die Fügeeinheit (8) mindestens ein Festlegemittel (20) umfasst, das einen quer zur Fügerichtung (12) erstreckten Vorsprung (22) umfasst, das beim Bewegen in Fügerichtung (12) in eine Aufnahmeöffnung (24) der Aufnahmeeinheit (10) einführbar ist und dessen Vorsprung (22) durch das Stellmittel (14) quer zur Fügerichtung (12) bewegbar und in einer quer zur Fügerichtung (12) erstreckten Ausnehmung (26) in der Aufnahmeöffnung (24) in diese eingreifend und, zumindest in der Anschlagstellung des Stellmittels (14), in einer Hintergriffstellung festlegbar ist, in der der Vorsprung (22) die Ausnehmung (26) bezüglich der Fügerichtung (12) hintergreift, **dadurch gekennzeichnet, dass** die Aufnahmeeinheit (10) mindestens einen in Richtung auf die Fügeeinheit (8) vorspringenden Auflageabschnitt (30) aufweist und dass die Fügeeinheit (8) mindestens einen Wippabschnitt (32) aufweist, der in der Anschlagstellung am Auflageabschnitt (30) anliegt, wobei der Wippabschnitt (32) zwischen dem Festlegemittel (20) und dem Stellmittel (14) angeordnet ist und wobei das Stellmittel (14) in der Anschlagstellung das Festlegemittel (20) über den Wippabschnitt (32) mit einer Hebelkraft in Richtung auf die Hintergriffstellung beaufschlagt.

2. Festlegevorrichtung (2) nach Anspruch 1, **dadurch gekennzeichnet, dass** das Festlegemittel (20) einen Längsabschnitt (28) umfasst an dessen freiem Ende der Vorsprung (22) abgeordnet ist und/oder dass der Vorsprung (22) haken-, keilförmig oder blockförmig ausgebildet ist.

3. Festlegevorrichtung (2) nach Anspruch 1 oder 2, **dadurch gekennzeichnet, dass** das Festlegemittel (20) quer zur Fügerichtung (12) im Wesentlichen unelastisch ausgebildet ist oder dass das Festlegemittel (20) quer zur Fügerichtung (12) elastisch ausgebildet ist und in die Hintergriffstellung vorgespannt ist.

4. Festlegevorrichtung (2) nach mindestens einem der vorherigen Ansprüche,
**dadurch gekennzeichnet, dass** ein zwischen dem Wippabschnitt (32) und dem Stellmittel (14) gebildeter erste Hebelarm (34) eine größere Erstreckung umfasst als ein zwischen dem Wippabschnitt (32) und dem Festlegemittel (20) gebildeter zweiter Hebelarm (36), insbesondere dass das Längenverhältnis zwischen dem ersten Hebelarm (34) und dem zweiten Hebelarm (36) größer gleich 3:1, insbesondere 5:1, insbesondere 10:1, umfasst.

5. Festlegevorrichtung (2) nach mindestens einem der vorhergehenden Ansprüche, **dadurch gekennzeichnet, dass** der Wippabschnitt (32) einen zumindest in Fügerichtung (12) elastisch nachgiebigen Bereich umfasst.

6. Festlegevorrichtung (2) nach mindestens einem der vorhergehenden Ansprüche, **dadurch gekennzeichnet, dass** die Stellkontur (16) der Aufnahmeeinheit (10) auf der Fügerichtung (12) abgewandten Seite einen schräg zur Fügerichtung (12) erstreckten Abschnitt umfasst, der eine Führung für das Stellmittel (14) der Fügeeinheit (8) bei Bewegung in Fügerichtung(12) bildet.

7. Festlegevorrichtung (2) nach mindestens einem der vorhergehenden Ansprüche, **dadurch gekennzeichnet, dass** die Stellkontur (16) mindestens eine quer zur Fügerichtung (12) erstreckte Nut umfasst, in der das Stellmittel (14) mit einem freien Ende in der Anschlagstellung zumindest abschnittsweise anordenbar ist.

8. Festlegevorrichtung (2) nach mindestens einem der vorhergehenden Ansprüche, **dadurch gekennzeichnet, dass** die Stellkontur (16) eine fingerartige Erstreckung (42) in Richtung auf die Fügeeinheit (8) umfasst und/oder dass das Stellmittel (14) eine in Fügerichtung (12) erstreckte Aussparung (40) umfasst, in der die fingerartige Erstreckung (42) der Stellkontur (16) anordenbar ist.

9. Festlegevorrichtung (2) nach mindestens einem der vorhergehenden Ansprüche, **dadurch gekennzeichnet, dass** die Festlegeeinheit und die Aufnahmeeinheit (10) mindestens eine in Fügerichtung (12) erstreckte Öffnung umfasst, in der ein Haltemittel, wie Schrauben oder Bolzen, in der Anschlagstellung festlegbar ist und die Öffnung in der Fügeeinheit (8) mit einem Kopfabschnitt gegen ein Bewegen entgegen der Fügerichtung (12) hintergreift.

10. Festlegevorrichtung (2) nach mindestens einem der vorhergehenden Ansprüche, **dadurch gekennzeichnet, dass** das Festlegemittel (20), der Wippabschnitt (32) und das Stellmittel (14) der Festlegeeinheit ein gemeinsames Bauteil, insbesondere Spritzgussteil, umfassen.

## Claims

1. A fastening device (2) for fastening a module (4) to a vehicle component (6) of a motor vehicle, comprising at least one joining unit (8) that can be fastened to the module (4) and a receiving unit (10) that can be arranged in or on the vehicle component (6), in or on which the joining unit (8) can be fastened by moving it in a joining direction (12), wherein the joining unit (8) has at least one adjusting means (14) that, when moved in the joining direction (12), can slide along an adjusting contour (16) of the receiving unit (10) and can be arranged in a stop position in which the adjusting means (14) can be fastened against a stop (18) of the receiving unit (10), and wherein the joining unit (8) comprises at least one fixing means (20) that comprises a projection (22) extending transversely to the joining direction (12), which, when moved in the joining direction (12) into a receiving opening (24) of the receiving unit (10) and whose projection (22) is movable by the adjusting means (14) transversely to the joining direction (12) and engages in a recess (26) extending transversely to the joining direction (12) in the receiving opening (24) and, at least in the stop position of the adjusting means (14), can be fixed in a rear-engaging position in which the projection (22) engages behind the recess (26) with respect to the joining direction (12), **characterized in that** the receiving unit (10) has at least one support section (30) projecting in the direction of the joining unit (8) and **in that** the joining unit (8) has at least one rocking section (32) which bears against the support section (30) in the stop position, wherein the rocking section (32) is arranged between the fixing means (20) and the adjusting means (14) and wherein, in the stop position, the adjusting means (14) applies a lever force to the securing means (20) via the rocking section (32) in the direction of the rear-engagement position.

2. The securing device (2) according to claim 1, **characterized in that** the securing means (20) comprises a longitudinal section (28) at the free end of which the projection (22) is located and/or that the projection (22) is hook-shaped, wedge-shaped, or block-shaped.

3. The securing device (2) according to claim 1 or 2, **characterized in that** the securing means (20) is substantially inelastic transversely to the joining direction (12), or that the securing means (20) is elastic transversely to the joining direction (12) and is pretensioned into the rear-engagement position.

4. The securing device (2) according to at least one of the preceding claims, **characterized in that** a first lever arm (34) formed between the rocking section (32) and the adjusting means (14) has a greater extension than a second lever arm (36) formed between the rocking section (32) and the securing means (20), in particular that the length ratio between the first lever arm (34) and the second lever arm (36) is greater than or equal to 3:1, in particular 5:1, in particular 10:1.

5. The securing device (2) according to at least one of the preceding claims, **characterized in that** the rocking section (32) comprises a region that is elastically flexible at least in the joining direction (12).

6. The securing device (2) according to at least one of the preceding claims, **characterized in that** the adjusting contour (16) of the receiving unit (10) comprises, on the side facing away from the joining direction (12), a section extending obliquely to the joining direction (12), which forms a guide for the adjusting means (14) of the joining unit (8) when moving in the joining direction (12).

7. The securing device (2) according to at least one of the preceding claims, **characterized in that** the adjusting contour (16) comprises at least one groove extending transversely to the joining direction (12), in which the adjusting means (14) can be arranged at least partially with a free end in the stop position.

8. The securing device (2) according to at least one of the preceding claims, **characterized in that** the adjusting contour (16) comprises a finger-like extension (42) in the direction of the joining unit (8) and/or that the adjusting means (14) comprises a recess (40) extending in the joining direction (12), in which the finger-like extension (42) of the adjusting contour (16) can be arranged.

9. The securing device (2) according to at least one of the preceding claims, **characterized in that** the securing unit and the receiving unit (10) comprise at least one opening extending in the joining direction (12), in which a holding means, such as screws or bolts, can be secured in the stop position and engages behind the opening in the joining unit (8) with a head portion to prevent movement counter to the joining direction (12).

10. Fixing device (2) according to at least one of the preceding claims, **characterized in that** the fixing means (20), the rocking section (32) and the adjusting means (14) of the fixing unit form a common component, in particular an injection-molded part

## Revendications

1. Dispositif de fixation (2) pour la fixation d'un module (4) à un composant (6) d'un véhicule automobile, comprenant au moins une unité d'assemblage (8) pouvant être fixée au module (4) et une unité de réception (10) pouvant être disposée dans ou sur le composant (6), dans ou sur laquelle l'unité d'assemblage (8) peut être fixée par déplacement dans une direction d'assemblage (12). L'unité d'assemblage (8) comporte au moins un moyen de réglage (14) qui, lorsqu'il est déplacé dans la direction d'assemblage (12), peut coulisser le long d'un contour de réglage (16) de l'unité de réception (10) et être disposé dans une position de butée dans laquelle le moyen de réglage (14) peut être fixé contre une butée (18) de l'unité de réception (10). L'unité d'assemblage (8) comprend au moins un moyen de fixation (20) comprenant une saillie (22) s'étendant transversalement à la direction d'assemblage (12) qui, lorsqu'elle est déplacée dans la direction d'assemblage (12), pénètre dans une ouverture de réception (24) de l'unité de réception. (10) et dont la saillie (22) est déplaçable par le moyen de réglage (14) transversalement à la direction d'assemblage (12) et s'engage dans un évidement (26) s'étendant transversalement à la direction d'assemblage (12) dans l'ouverture de réception (24) et, au moins dans la position d'arrêt du moyen de réglage (14), peut être fixée dans une position d'engagement arrière dans laquelle la saillie (22) s'engage derrière l'évidement (26) par rapport à la direction d'assemblage (12). L'unité de réception (10) est **caractérisée en ce que** l'unité de réception (10) présente au moins une section d'appui (30) faisant saillie en direction de l'unité d'assemblage (8) et **en ce que** l'unité d'assemblage (8) présente au moins une section basculante (32) qui s'appuie contre la section d'appui (30) en position d'arrêt. La section basculante (32) est disposée entre le moyen de fixation (20) et le moyen de réglage (14) et, dans la position d'arrêt, le moyen de réglage (14) applique une force de levier sur le moyen de fixation (20) via la section basculante (32) dans la direction de la position d'engagement arrière.

2. Dispositif de fixation (2) selon la revendication 1, **caractérisé en ce que** le moyen de fixation (20) comprend une section longitudinale (28) à l'extrémité libre de laquelle se trouve la saillie (22) et/ou **en ce que** la saillie (22) est en forme de crochet, de coin ou de bloc.

3. Dispositif de fixation (2) selon la revendication 1 ou 2, **caractérisé en ce que** le moyen de fixation (20) est sensiblement inélastique transversalement à la direction d'assemblage (12), ou **en ce que** le moyen de fixation (20) est élastique transversalement à la direction d'assemblage (12) et est précontraint en position d'engagement arrière.

4. Dispositif de fixation (2) selon au moins l'une des revendications précédentes, **caractérisé en ce qu'**un premier bras de levier (34) formé entre la section basculante (32) et le moyen de réglage (14) présente une extension supérieure à celle d'un second bras de levier (36) formé entre la section basculante (32) et le moyen de fixation (20). Le rapport de longueur entre le premier bras de levier (34) et le second bras de levier (36) est notamment supérieur ou égal à 3:1, notamment à 5:1, notamment à 10:1.

5. Dispositif de fixation (2) selon au moins l'une des revendications précédentes, **caractérisé en ce que** la section basculante (32) comprend une zone élastiquement flexible au moins dans la direction d'assemblage (12).

6. Dispositif de fixation (2) selon au moins l'une des revendications précédentes, **caractérisé en ce que** le contour de réglage (16) de l'unité de réception (10) comporte, du côté opposé à la direction d'assemblage (12), une section oblique par rapport à cette direction, qui forme un guide pour le moyen de réglage (14) de l'unité d'assemblage (8) lors de son déplacement dans la direction d'assemblage (12).

7. Dispositif de fixation (2) selon au moins l'une des revendications précédentes, **caractérisé en ce que** le contour de réglage (16) comporte au moins une rainure transversale à la direction d'assemblage (12), dans laquelle le moyen de réglage (14) peut être disposé au moins partiellement, son extrémité libre étant en position de butée.

8. Dispositif de fixation (2) selon au moins l'une des revendications précédentes, **caractérisé en ce que** le contour de réglage (16) présente une extension en forme de doigt (42) en direction de l'unité d'assemblage (8) et/ou **en ce que** le moyen de réglage (14) présente un évidement (40) s'étendant dans la direction d'assemblage (12), dans lequel l'extension en forme de doigt (42) du contour de réglage (16) peut être disposée.

9. Dispositif de fixation (2) selon au moins l'une des revendications précédentes, **caractérisé en ce que** l'unité de fixation et l'unité de réception (10) comprennent au moins une ouverture s'étendant dans la direction d'assemblage (12), dans laquelle un moyen de maintien, tel qu'une vis ou un boulon, peut être fixé en position de butée et s'engage derrière l'ouverture de l'unité d'assemblage (8) avec une tête pour empêcher tout mouvement dans le sens inverse de l'assemblage (12).

10. Dispositif de fixation (2) selon au moins l'une des revendications précédentes, **caractérisé en ce que** le moyen de fixation (20), la section basculante (32) et le moyen de réglage (14) de l'unité de fixation forment un composant commun, notamment une pièce moulée par injection.
